# EUROPEAN PATENT SPECIFICATION

(11) **EP 2 790 500 B1**
(45) Date of publication and mention of the grant of the patent: **25.11.2015**
(21) Application number: 12797849.2
(22) Date of filing: 29.11.2012
(51) Int. Cl.: A01P 3/00, A01N 25/02, A01N 25/04, A01N 37/18, A01N 43/40, A01N 43/56

(54) **EMULSIFIABLE CONCENTRATE COMPRISING PESTICIDE, AMIDE, CARBONATE AND HYDROCARBON**
EMULGIERBARES KONZENTRAT MIT EINEM PESTIZID, EINEM AMID, EINEM CARBONAT UND KOHLENWASSERSTOFF
CONCENTRÉ ÉMULSIFIABLE COMPRENANT UN PESTICIDE, UN AMIDE, UN CARBONATE ET UN HYDROCARBURE

(30) Priority: 14.12.2011 US 201161570320 P; 14.12.2011 EP 11193531; 10.02.2012 EP 12154847
(43) Date of publication of application: 22.10.2014
(73) Proprietor: BASF SE, 67056 Ludwigshafen (DE)
(72) Inventor: DIELEMAN, Cedric, 67630 Scheibenhard (FR); MAYER, Winfried, 55270 Bubenheim (DE); JAKOB, Jürgen, 67127 Rödersheim-Gronau (DE); RIEDIGER, Nadine, 67105 Schifferstadt (DE)
(86) International application number: PCT/EP2012/073935
(87) International publication number: WO 2013/087416

(56) References cited:
- WO-A1-93/00809
- WO-A1-2011/085310
- WO-A2-2006/094371
- US-A- 4 506 051
- US-A1- 2008 090 780
- US-A1- 2008 311 221

## Description

Subject matter of the present invention is an emulsifiable concentrate comprising a water-insoluble pesticide, an amide of the formula (I)

R¹-C(O)N(R²)₂ (I)

where R¹ is C₅-C₁₉-alkyl, and R² is C₁-C₄-alkyl, a carbonate, which is ethylene carbonate or propylene carbonate, and a hydrocarbon solvent. A further subject matter is an emulsion obtainable by mixing water with the emulsifiable concentrate; a process for the preparation of the emulsifiable concentrate; and a method for controlling phytopathogenic fungi and/or undesired vegetation and/or undesired attack by insects or mites and/or for regulating the growth of plants, where the concentrate or the emulsion is allowed to act on the respective pests, their environment or on the crop plants to be protected from the respective pests, on the soil and/or on undesired plants and/or on the crop plants and/or their environment. The present invention comprises combinations of preferred features with other preferred features.

Emulsifiable concentrates (also referred to as emulsion concentrates or EC) are widely used formulations in crop protection.

WO2011/085310 discloses a matrix composition capable of forming an emulsion and comprising a long chain substituted amide, and optionally an organic diluent. A disadvanatage is that the composition must be essentially free of alkoxylated alcohols.

WO93/00809 discloses an emulsifiable concentrate comprising a surfactant and a solvent selected either from a first component having a high hydrophilic property or in the alternative from a second component having a HLB of 2-8.

The disadvantages of the known emulsion concentrates are the poor cold stability, the pronounced tendency to crystallize and the low pesticide concentration.

It was an object of the present invention to provide an emulsion concentrate which overcomes these disadvantages.

The object was achieved by an emulsifiable concentrate comprising a water-insoluble pesticide; an amide of the formula (I)

R¹-C(O)N(R²)₂ (I)

where R¹ is C₅-C₁₉-alkyl, and R² is C₁-C₄-alkyl; a carbonate, which is ethylene carbonate or propylene carbonate; and a C₆-C₂₀ hydrocarbon solvent, which has a solubility in water of not more than 5% at 20°C, wherein the emulsifiable concentrate comprises not more than 35% by weight of the amide of the formula (I), not more than 40% by weight of the carbonate, and at least 15% by weight of the hydrocarbon solvent.

Usually, an **emulsifiable concentrate** is taken to mean compositions which form an oil-in-water emulsion upon mixing with water (e.g. in a weight ratio of 1 part concentrate to 99 parts water). The emulsion usually arises spontaneously. The resulting emulsion may have an average droplet size of more than 0.1 µm, preferably more than 0.5 µm, in particular more than 0.8 µm, and most preferred more than 1.1 µm. The average droplet size may be determined by laser diffraction, e.g. with a Malvern Mastersizer 2000.

The concentrate is preferably present as a **homogeneous solution.** It is usually virtually free from dispersed particles.

Preferred **amides** of the formula (I) are those in which R¹ is C₇-C₁₁-alkyl and R² is methyl. Especially preferred amides of the formula (I) are those in which R¹ is C₇-C₉-alkyl and R² is methyl. Mixtures of amides of the formula (I) are also possible, for example mixtures where R¹ is C₇-C₁₁-alkyl and R² is methyl. Mixtures of amides of the formula (I) comprise in most cases two amides of the formula (I) in an amount of in each case at least 30% by weight (preferably at least 40% by weight) based on the total amount of amides of the formula (I).

The concentrate comprises not more than 35% by weight and in particular not more than 25% by weight of amide of the formula (I). The concentrate can comprise at least 3% by weight, preferably at least 8% by weight and in particular at least 15% by weight of amide of the formula (I).

The preferred **carbonate** is propylene carbonate. Mixtures of propylene carbonate and ethylene carbonate are also possible.

The concentrate can comprise not more than 40% by weight, preferably not more than 20% by weight and in particular not more than 15% by weight of carbonate (such as propylene carbonate). The concentrate can comprise at least 1% by weight, preferably at least 3% by weight and in particular at least 5% by weight of carbonate (such as propylene carbonate).

Suitable **hydrocarbon solvents** are aliphatic (such as linear or cyclic) or aromatic hydrocarbons. Preferred hydrocarbon solvents are aromatic hydrocarbons. Aromatic hydrocarbons may, besides at least one aromatic hydrocarbon unit, also comprise aliphatic hydrocarbon substituents.

The hydrocarbon solvent has a solubility in water of not more than 5% by weight, preferably not more than 1 % by weight and in particular not more than 0.3% by weight at 20°C. In most cases, the hydrocarbon solvent has a boiling point at 1013 mbar of at least 100°C, preferably at least 150°C and in particular at least 180°C. Usually, the hydrocarbon solvent comprises only carbon and hydrogen atoms. The hydrocarbon solvent is a C₆-C₂₀-hydrocarbon, in particular a C₈-C₁₆-hydrocarbon.

Suitable **aromatic hydrocarbons** are above all alkyl-substituted aromatics, such as toluene, the xylenes, ethylbenzenes and benzenes having longer-chain alkyl radicals, for example C₉-C₁₀-dialkyl- and -trialkylbenzenes (for example Solvesso® 100 from Exxon Mobile Europe or Aromatic 100 from Exxon Mobile USA), C₁₀-C₁₁alkylbenzenes (for example Solvesso® 150 from Exxon Mobile Europe or Aromatic 150 from Exxon Mobile USA) and alkylnaphthalenes (for example Solvesso® 200 from Exxon Mobile Europe or Aromatic 200 from Exxon Mobile USA).

Also suitable are mixtures of the abovementioned aromatics. Preferably, the aromatic hydrocarbon comprises not more than 5% by weight, more preferably not more than 2% by weight and in particular not more than 1 % by weight of naphthalene, based on the total weight of the aromatic solvent. Such solvents with a naphthalene content of not more than 1 % by weight are commercially available for example from Exxon Mobile Europe with the designation ND (naphthalene depleted), for example Solvesso® 150 ND and Solvesso® 200 ND from Exxon Mobile Europe. Even lower naphthalene contents of not more than 0.1 % by weight are present in the products Aromatic 150 ULN and Aromatic 200 ULN from Exxon Mobile USA.

The concentrate can comprise not more than 80% by weight, preferably not more than 65% by weight and in particular not more than 55% by weight of hydrocarbon solvent. The concentrate comprises at least 15% by weight, preferably at least 25% by weight and in particular at least 35% by weight of hydrocarbon solvent.

The concentrate can comprise from 5 to 35% by weight of the amide of the formula (I), from 1 to 20% by weight of the carbonate and from 20 to 85% by weight of the hydrocarbon solvent. Preferably, the solvent can comprise from 10 to 30% by weight of the amide of the formula (I), from 2 to 15% by weight of the carbonate and from 30 to 70% by weight of the hydrocarbon solvent.

In most cases, the concentrate is largely **free from water**. It can comprise not more than 3% by weight, preferably not more than 1 % by weight and in particular not more than 0.5% by weight of water.

The term **pesticides** refers to at least one active substance selected from the group of the fungicides, insecticides, nematicides, herbicides, safeners and/or growth regulators. Preferred pesticides are fungicides, insecticides, herbicides and growth regulators. Especially preferred pesticides are fungicides. Mixtures of pesticides from two or more of the abovementioned classes may also be used. The skilled worker is familiar with such pesticides, which can be found, for example, in Pesticide Manual, 15th Ed. (2009), The British Crop Protection Council, London.

The following pesticides are suitable, by way of example (pesticides A) to K) are fungicides):
A) Respiration inhibitors
   - complex-111-inhibitors at the Qₒ-site (for example strobilurins): azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, methyl 2-[2-(2,5-dimethylphenyloxymethyl)phenyl]-3-methoxyacrylate, 2-(2-(3-(2,6-dichlorophenyl)-1-methylallylideneaminooxymethyl)phenyl)-2-methoxyimino-N-methylacetamide, pyribencarb, triclopyricarb/chlorodincarb, famoxadon, fenamidon;
   - complex-111-inhibitors at the Qᵢ-site: cyazofamid, amisulbrom;
   - complex-11-inhibitors (for example carboxamides): benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethylbutyl)phenyl)-1,3-dimethyl-5-fluoro-1H-pyrazole-4-carboxamide and N-[9-(dichloromethylene)-1,2,3,4-tetrahydro-1,4-methanonaphthalen-5-yl]-3-(difluoromethyl)-1-methyl-1 H-pyrazole-4-carboxamide;
   - other respiration inhibitors (for example complex I, decouplers): diflumetorim; nitrophenyl derivatives: binapacryl, dinobuton, dinocap, fluazinam; ferimzone; organometal compounds: fentin salts such as fentin acetate, fentin chloride or fentine hydroxide; ametoctradin; and silthiofam;
B) Sterol biosynthesis inhibitors (SBI fungicides)
   - C14-demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles: imazalil, pefurazoate, prochloraz, triflumizole; pyrimidines, pyridines and piperazines: fenarimol, nuarimol, pyrifenox, triforine;
   - delta14-reductase inhibitors: aldimorph, dodemorph, dodemorph acetate, fenpropimorph, tridemorph, fenpropidin, piperalin, spiroxamine;
   - 3-ketoreductase inhibitors: fenhexamid;
C) Nucleic acid synthesis inhibitors
   - phenylamides or acylamino acid fungicides: benalaxyl, benalaxyl-M, kiralaxyl, metalaxyl, metalaxyl-M (mefenoxam), ofurace, oxadixyl;
   - others: hymexazole, octhilinone, oxolinic acid, bupirimate;
D) Cell division and cytoskeleton inhibitors
   - tubulin inhibitors such as benzimidazoles, thiophanates: benomyl, carbendazim, fuberidazole, thiabendazole, thiophanate-methyl; triazolopyrimidines: 5-chloro-7-(4-methylpiperidin-1-yl)-6-(2,4,6-trifluorophenyl)-[1,2,4]triazolo[1,5-a]pyrimidine;
   - further cell division inhibitors: diethofencarb, ethaboxam, pencycuron, fluopicolid, zoxamid, metrafenon, pyriofenon;
E) Amino acid synthesis and protein synthesis inhibitors
   - methionine synthesis inhibitors (anilinopyrimidines): cyprodinil, mepanipyrim, pyrimethanil;
   - protein synthesis inhibitors: blasticidin-S, kasugamycin, kasugamycin hydrochloride hydrate, mildiomycin, streptomycin, oxytetracyclin, polyoxin, validamycin A;
F) Signal transduction inhibitors
   - MAP/histidine kinase inhibitors: fluoroimide, iprodione, procymidone, vinclozolin, fenpiclonil, fludioxonil;
   - G-protein inhibitors: quinoxyfen;
G) Lipid and membrane synthesis inhibitors
   - phospholipid biosynthesis inhibitors: edifenphos, iprobenfos, pyrazophos, isoprothiolane;
   - lipid peroxidation: dicloran, quintozene, tecnazene, tolclofos-methyl, biphenyl, chloroneb, etridiazole;
   - phospholipid biosynthesis and cell wall attachment: dimethomorph, flumorph, mandipropamid, pyrimorph, benthiavalicarb, iprovalicarb, valifenalate and 4-fluorophenyl N-(1-(1-(4-cyanophenyl)ethanesulfonyl)but-2-yl)carbamate;
   - compounds which affect cell membrane permeability and fatty acids: propamocarb, propamocarb hydrochloride
H) "Multi-site" inhibitors
   - inorganic active substances: Bordeaux mixture, copper acetate, copper hydroxide, copper oxychloride, basic copper sulfate, sulfur;
   - thio- and dithiocarbamates: ferbam, mancozeb, maneb, metam, metiram, propineb, thiram, zineb, ziram;
   - organochlorine compounds (for example phthalimides, sulfamides, chloronitriles): anilazine, chlorothalonil, captafol, captan, folpet, dichlofluanid, dichlorophen, flusulfamide, hexachlorobenzene, pentachlorophenol and its salts, phthalid, tolylfluanid, N-(4-chloro-2-nitrophenyl)-N-ethyl-4-methylbenzenesulfonamide;
   - guanidines and others: guanidine, dodine, dodine-free base, guazatine, guazatine acetate, iminoctadine, iminoctadine triacetate, iminoctadine tris(albesilate), dithianon;
I) Cell wall biosynthesis inhibitors
   - glucan synthesis inhibitors: validamycin, polyoxin B; melanin synthesis inhibitors: pyroquilon, tricyclazole, carpropamid, dicyclomet, fenoxanil;
J) Resistance inductors
   - acibenzolar-S-methyl, probenazole, isotianil, tiadinil, prohexadione-calcium; phosphonates: fosetyl, fosetyl-aluminum, phosphorous acid and its salts;
K) Unknown mode of action
   - bronopol, quinomethionate, cyflufenamid, cymoxanil, dazomet, debacarb, diclomezin, difenzoquat, difenzoquat-methyl sulfate, diphenylamine, fenpyrazamine, flumetover, flusulfamid, flutianil, methasulfocarb, nitrapyrin, nitrothal-isopropyl, oxine-copper, proquinazid, tebufloquin, tecloftalam, triazoxide, 2-butoxy-6-iodo-3-propylchromene-4-one, N-(cyclopropylmethoxyimino-(6-difluoromethoxy-2,3-difluorophenyl)methyl)-2-phenyl-acetamide, N'-(4-(4-chloro-3-trifluoromethylphenoxy)-2,5-dimethylphenyl)-N-ethyl-N-methylformamidine, N'-(4-(4-fluoro-3-trifluoromethylphenoxy)-2,5-dimethylphenyl)-N-ethyl-N-methylformamidine, N'-(2-methyl-5-trifluoromethyl-4-(3-trimethylsilanylpropoxy)phenyl)-N-ethyl-N-methylformamidine, N'-(5-difluoromethyl-2-methyl-4-(3-trimethylsilanylpropoxy)-phenyl)-N-ethyl-N-methylformamidine, N-methyl-(1,2,3,4-tetrahydronaphthalen-1-yl)-2-{1-[2-(5-methyl-3-trifluoromethylpyrazol-1-yl)acetyl]piperidin-4-yl}thiazole-4-carboxamide, N-methyl-(R)-1,2,3,4-tetrahydronaphthalen-1-yl-2-{1-[2-(5-methyl-3-trifluoromethylpyrazol-1-yl)-acetyl]piperidin-4-yl}thiazole-4-carboxamide, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1H-pyrazol-1-yl]ethanone, 6-tert.-butyl-8-fluoro-2,3-dimethylquinolin-4-yl methoxyacetate, *N*-methyl-2-{1-[(5-methyl-3-trifluoromethyl-1H-pyrazol-1-yl)acetyl]piperidin-4-yl}-*N-*[(1R)-1,2,3,4-tetrahydronaphthalen-1-yl]-4-thiazolecarboxamide, 3-[5-(4-methylphenyl)-2,3-dimethylisoxazolidin-3-yl]-pyridine, 3-[5-(4-chlorophenyl)-2,3-dimethylisoxazolidin-3-yl]-pyridine (pyrisoxazole), N-(6-methoxypyridin-3-yl)cyclopropanecarboxamide, 5-chloro-1-(4,6-dimethoxypyrimidin-2-yl)-2-methyl-1 H-benzoimidazole, 2-(4-chlorophenyl)-N-[4-(3,4-dimethoxyphenyl)isoxazol-5-yl]-2-prop-2-ynyloxyacetamide;
M) Growth regulators
   - abscisic acid, amidochlor, ancymidole, 6-benzylaminopurine, brassinolide, butralin, chlormequat (chlormequat chloride), choline chloride, cyclanilid, daminozide, dikegulac, dimethipin, 2,6-dimethylpuridine, ethephon, flumetralin, flurprimidol, fluthiacet, forchlorfenuron, gibberellic acid, inabenfid, indole-3-acetic acid, maleic hydrazide, mefluidid, mepiquat (mepiquat chloride), metconazole, naphthaleneacetic acid, N-6-benzyladenine, paclobutrazole, prohexadione (prohexadione-calcium), prohydrojasmone, thidiazuron, triapenthenol, tributylphosphorotrithioate, 2,3,5-triiodobenzoic acid, trinexapac-ethyl and uniconazole;
N) **Herbicides**
   - acetamides: acetochlor, alachlor, butachlor, dimethachlor, dimethenamid, flufenacet, mefenacet, metolachlor, metazachlor, napropamid, naproanilid, pethoxamid, pretilachlor, propachlor, thenylchlor;
   - amino acid analogs: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - bipyridyls: diquat, paraquat;
   - carbamates and thiocarbamates: asulam, butylate, carbetamide, desmedipham, dimepiperat, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oxyfluorfen;
   - hydroxybenzonitriles: bromoxynil, dichlobenil, ioxynil;
   - imidazolinones: imazamethabenz, imazamox, imazapic, imazapyr, imazaquin, imazethapyr;
   - phenoxyacetic acids: clomeprop, 2,4-dichlorophenoxyacetic acid (2,4-D), 2,4-DB, dichlorprop, MCPA, MCPA-thioethyl, MCPB, mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonylureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxypyrimidin-2-yl)urea;
   - triazines: ametryne, atrazine, cyanazine, dimethametryne, ethiozine, hexazinone, metamitron, metribuzine, prometryne, simazine, terbuthylazine, terbutryne, triaziflam;
   - ureas: chlortoluron, daimuron, diuron, fluometuron, isoproturon, linuron, methabenzthiazuron, tebuthiuron;
   - other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalid, pyriminobac-methyl, pyrimisulfan, pyrithiobac, pyroxasulfon, pyroxsulam;
   - others: amicarbazone, aminotriazole, anilofos, beflubutamid, benazolin, bencarbazone, benfluresate, benzofenap, bentazone, benzobicyclon, bromacil, bromobutide, butafenacil, butamifos, cafenstrole, carfentrazone, cinidon-ethyl, chlorthal, cinmethylin, clomazone, cumyluron, cyprosulfamid, dicamba, difenzoquat, diflufenzopyr, *Drechslera monoceras*, endothal, ethofumesate, etobenzanid, fentrazamide, flumiclorac-pentyl, flumioxazin, flupoxam, fluorochloridon, flurtamon, indanofan, isoxaben, isoxaflutol, lenacil, propanil, propyzamide, quinclorac, quinmerac, mesotrione, methylarsenic acid, naptalam, oxadiargyl, oxadiazone, oxaziclomefon, pentoxazone, pinoxaden, pyraclonil, pyraflufen-ethyl, pyrasulfotol, pyrazoxyfen, pyrazolynate, quinoclamine, saflufenacil, sulcotrione, sulfentrazone, terbacil, tefuryltrione, tembotrione, thiencarbazone, topramezone, 4-hydroxy-3-[2-(2-methoxyethoxymethyl)-6-trifluoromethylpyridin-3-carbonyl]bicyclo[3.2.1]oct-3-en-2-one, ethyl (3-[2-chloro-4-fluoro-5-(3-methyl-2,6-dioxo-4-trifluoromethyl-3,6-dihydro-2H-pyrimidin-1-yl)phenoxy]pyridin-2-yloxy)acetate, methyl 6-amino-5-chloro-2-cyclopropylpyrimidine-4-carboxylate, 6-chloro-3-(2-cyclopropyl-6-methylphenoxy)pyridazin-4-ol, 4-amino-3-chloro-6-(4-chlorophenyl)-5-fluoropyridin-2-carboxylic acid, methyl 4-amino-3-chloro-6-(4-chloro-2-fluoro-3-methoxyphenyl)pyridin-2-carboxylate and methyl 4-amino-3-chloro-6-(4-chloro-3-dimethylamino-2-fluorophenyl)pyridin-2-carboxylate;
O) Insecticides
   - organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
   - carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   - pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin,
   - insect growth inhibitors: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazin; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramate;
   - nicotine receptor agonists/antagonists: clothianidin, dinotefuran, imidacloprid, thiamethoxam, nitenpyram, acetamiprid, thiacloprid, 1-(2-chlorothiazol-5-ylmethyl)-2-nitrimino-3,5-dimethyl-[1,3,5]triazinane;
   - GABA antagonists: endosulfan, ethiprole, fipronil, vaniliprole, pyrafluprole, pyriprole, N-5-amino-1-(2,6-dichloro-4-methylphenyl)-4-sulfinamoyl-1H-pyrazole-3-thiocarboxamide;
   - macrocyclic lactones: abamectin, emamectin, milbemectin, lepimectin, spinosad, spinetoram;
   - mitochondrial electron transport chain inhibitor (METI) I acaricides: fenazaquin, pyridaben, tebufenpyrad, tolfenpyrad, flufenerim;
   - METI II and III substances: acequinocyl, fluacyprim, hydramethylnone;
   - decouplers: chlorfenapyr;
   - inhibitors of oxidative phosphorylation: cyhexatin, diafenthiuron, fenbutatin oxide, propargite;
   - insect ecdysis inhibitors: cryomazine;
   - 'mixed function oxidase' inhibitors: piperonyl butoxide;
   - sodium channel blockers: indoxacarb, metaflumizone;
   - others: benclothiaz, bifenazate, cartap, flonicamid, pyridalyl, pymetrozine, sulfur, thiocyclam, flubendiamide, chlorantraniliprole, cyazypyr (HGW86); cyenopyrafen, flupyrazofos, cyflumetofen, amidoflumet, imicyafos, bistrifluron and pyrifluquinazone.

Preferred pesticides are fungicides, especially preferably complex II inhibitors (for example carboxamides), specifically boscalid, fluxapyroxad, bixafen, sedaxane, penthiopyrat or isopyrazam.

The pesticide is **water-insoluble**. Usually, it is soluble in water to not more than 1 g/l, preferably not more than 200 mg/l and in particular to not more than 50 mg/l at 25°C. Examples of water-insoluble pesticides are fluxapyroxad. Using simple preliminary experiments, the skilled worker can select a pesticide with a suitable water-solubility from the above pesticide list.

The pesticide can have a **melting point** of more than 40°C, preferably more than 70°C and in particular more than 90°C.

The pesticide is preferably present in the concentrate **in dissolved form.** Using simple preliminary experiments, the skilled worker can select, from the above pesticide list, a pesticide with a suitable solubility.

In addition to the water-insoluble pesticide, the concentrate can comprise one or more **further pesticides**. The further pesticide is preferably water-insoluble. Usually, it is soluble in water to not more than 1 g/l, preferably not more than 200 mg/l and in particular to not more than 50 mg/l at 25°C. Using simple preliminary experiments, the skilled worker can select a pesticide with a suitable water-solubility from the above pesticide list. In an especially preferred form, the concentrate does not comprise any further pesticide. In another especially preferred form, the further pesticide is epoxiconazol.

In a preferred form the concentrate comprises the water insoluble pesticide fluxapyroxad and optionally a further pesticide, which is water insoluble (e.g. epoxiconazol).

The concentrate can comprise at least 0.1 % by weight, preferably at least 1 % by weight and especially preferably at least 5% by weight of the pesticide. The concentrate can comprise from 0.1 to 60% by weight, preferably from 1 to 25% by weight, in particular from 3 to 15% by weight of pesticide, the basis being the total of all the pesticides present in the concentrate.

The emulsifiable concentrate can furthermore comprise auxiliaries conventionally used for crop protection products. Suitable **auxiliaries** are further solvents, liquid carriers, surfactants, dispersants, emulsifiers, wetters, adjuvants, solubilizers, penetrants, protective colloids, stickers, thickeners, bactericides, antifreeze agents, antifoam agents, colorants, adhesives and binders.

Besides the amide of the formula (I), the carbonate and the hydrocarbon solvent, the concentrate may comprise **further solvents.** In most cases, the concentrate comprises not more than 20% by weight, preferably not more than 3% by weight and in particular not more than 0.5% by weight of further solvents. Suitable further solvents and liquid carriers are organic solvents such as alcohols, for example ethanol, propanol, butanol, cyclohexanol; glycols; ketones, for example cyclohexanone; esters, for example lactates, carbonates, fatty acid esters, gamma-butyrolactone; fatty acids; phosphonates; amines; amides, for example N-methylpyrrolidone; and mixtures of these.

Suitable **surfactants** are surface-active compounds, such as anionic, cationic, nonionic and amphoteric surfactants, block polymers, polyelectrolytes, and mixtures thereof. Such surfactants can be used as emusifier, dispersant, solubilizer, wetter, penetrant, protective colloid, or auxiliary. Examples of surfactants are listed in McCutcheon's, Vol.1: Emulsifiers & Detergents, McCutcheon's Directories, Glen Rock, USA, 2008 (International Ed. or North American Ed.).

Suitable **anionic** surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates. Preferred anionic surfactants are sulfates and sulfonates.

Suitable **nonionic** surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are homo- or copolymers of vinylpyrrolidone, vinylalcohols, or vinylacetate. Preferred nonionic surfactants are alkoxylates, whereas alkoxylated alcohols are more preferred.

Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide, or of the A-B-C type comprising alkanol, polyethylene oxide and polypropylene oxide. Suitable **polyelectrolytes** are polyacids or polybases. Examples of polyacids are alkali salts of polyacrylic acid or polyacid comb polymers. Examples of polybases are polyvinylamines or polyethyleneamines.

Suitable **adjuvants** are compounds which have negligible or even no pesticidal activity themselves, and which improve the biological performance of the pesticide on the target. Examples are surfactants, mineral or vegetable oils, and other auxiliaries. Further examples are listed by Knowles, Adjuvants and Additives, Agrow Reports DS256, T&F Informa UK, 2006, chapter 5.

Suitable **bactericides** are bronopol and isothiazolinone derivatives such as alkylisothiazolinones and benzisothiazolinones. Suitable **antifreeze agents** are ethylene glycol, propylene glycol, urea and glycerol. Suitable **antifoam agents** are silicones, long-chain alcohols, and salts of fatty acids. Suitable **colorants** (e.g. in red, blue, or green) are pigments which are sparingly soluble in water, and water-soluble dyes. Examples are inorganic colorants (e.g. iron oxide, titanium oxide, iron hexacyanoferrate) and organic colorants (e.g. alizarin, azo and phthalocyanine colorants).

The concentrate preferably comprises at least one **nonionic surfactant** (such as alkoxylates). The concentrate usually comprises not less than 3% by weight of nonionic surfactants, preferably not less than 8% by weight and in particular not less than 15% by weight. The composition can comprise not more than 65% by weight of nonionic surfactants, preferably not more than 45% by weight and in particular not more than 35% by weight.

The invention furthermore relates to a process for the **preparation** of the emulsifiable concentrate according to the invention by mixing the water-insoluble pesticide, the carbonate, the amide of the formula (I) and the hydrocarbon solvent.

The invention furthermore relates to an **emulsion** obtainable (preferably obtained) by mixing water with the emulsifiable concentrate according to the invention. The emulsion normally arises spontaneously upon mixing. In most cases, the emulsion is an oil-in-water emulsion. The mixing ratio of water to concentrate can be in the range of from 1000 to 1 up to 1 to 1, preferably 200 to 1 up to 3 to 1.

The invention furthermore relates to a method for **controlling** phytopathogenic fungi and/or undesired vegetation and/or undesired attack by insects or mites and/or for regulating the growth of plants, where the concentrate according to the invention or the emulsion according to the invention is allowed to act on the respective pests, their environment or on the crop plants to be protected from the respective pests, on the soil and/or on undesired plants and/or on the crop plants and/or their environment.

When employed in crop protection, the **application rates of the pesticides** amount to from 0.001 to 2 kg per ha, preferably from 0.005 to 2 kg per ha, especially preferably from 0.05 to 0.9 kg per ha and in particular from 0.1 to 0.75 kg per ha, depending on the nature of the desired effect. In treatment of plant propagation materials such as seeds, e.g. by dusting, coating or drenching seed, amounts of active substance of from 0.1 to 1000 g, preferably from 1 to 1000 g, especially preferably from 1 to 100 g and in particular from 5 to 100 g, per 100 kg of plant propagation material (preferably seed) are generally required. When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizers or micronutrients and further pesticides (for example herbicides, insecticides, fungicides, growth regulators, safeners) may be added to the emulsion in the form of a premix or optionally only shortly before use (**tank mix**). These agents can be admixed to the compositions according to the invention at a weight ratio of from 1:100 to 100:1, preferably from 1:10 to 10:1.

The user **applies** the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

**Advantages** of the present invention are, inter alia, that the concentrate is highly stable at low temperatures (e.g. even below 0 °C); that the pesticide does not precipitate, cream or crystallize in the concentrate at low temperatures; that high pesticide concentrations in the concentrate can be employed; that an emulsion forms spontaneously upon dilution of the concentrate with water; that the concentrate is capable of being stored over prolonged periods; that adjuvants can be included in the concentrate formulations; that the concentrate causes no, or little, irritation of the skin or eyes; that the concentrate does not require the presence of water (e.g. because it might freeze below 0 °C or would favour bacterial growth during storage); that the concentrate forms a stable emulsion upon dilution with water; that the concentrate; that the concentrate may comprise alkoxylated alcohol (which are usually very helpful surfactants and/or adjuvants); or that the concentration of the carbonate or of the amide of the formula (I) in the concentrate can be reduced.

The examples which follow illustrate the invention without imposing any limitation.

### Examples

- Amid1:: Mix of 50-65 wt% N,N-Dimethyloctanamide and 37-50 wt% N,N-Dimethyl-decanamide.
- KW1:: Aromatic hydrocarbon mix, boiling point above 210 °C, solidifying point below -8 °C.
- NS1:: Nonionic surfactant, liquid ethoxylated polyalkylarylphenol, HLB 12-13.5.
- NS2:: Nonionic surfactant, liquid alkoxylated linear fatty alcohol, viskosity 110-130 mPas at room temperature.
- NS3:: Nonionic surfactant, liquid castor oil alkoxylate, HLB 10-11.
- NS4:: Nonionic surfactant, liquid ethoxylated polyalkylarylphenol.
- NS5:: Nonionic surfactant, liquid castor oil ethoxylate.
- NS6:: Nonionic surfactant, liquid castor oil alkoxylate, HLB 9.5-10.5.

### Examples 1-4: Preparation of emulsion concentrates

The emulsifiable concentrates were prepared by mixing of 62,5 g fluxapyroxad and the components as listed in Table 1, and filling up to 1,0 l with the hydrocarbon solvent KW1.

**Table 1: Composition of the examples 1-4 (all values in g/l)**

| Ex. | Amid1 | Propylene carbonate | KW1 | NS1 | NS2 | NS3 | NS4 | NS5 | NS6 |
|---|---|---|---|---|---|---|---|---|---|
| 1 | 200 | 90 | Ad 1,0 L | - | 100 | 50 | 30 | - | - |
| 2 | 200 | 90 | Ad 1,0 L | 30 | 100 | 50 | - | - | - |
| 3 | 200 | 90 | Ad 1,0 L | 30 | 100 | 50 | - | - | - |
| 4 | 200 | 90 | Ad 1,0 L | 30 | 100 | - | - | 25 | 25 |

## Claims

1. An emulsifiable concentrate comprising a water-insoluble pesticide; an amide of the formula (I)
R¹-C(O)N(R²)₂ (I)
where R¹ is C₅-C₁₉-alkyl and R² is C₁-C₄-alkyl; a carbonate, which is ethylene carbonate or propylene carbonate; and a C₆-C₂₀ hydrocarbon solvent, which has a solubility in water of not more than 5% by weight at 20°C,
wherein the emulsifiable concentrate comprises not more than 35% by weight of the amide of the formula (I), not more than 40% by weight of the carbonate, and at least 15% by weight of the hydrocarbon solvent.

2. The emulsifiable concentrate according to claim 1, comprising not more than 25% by weight of the amide of the formula (I).

3. The emulsifiable concentrate according to claim 1 or 2, comprising not more than 20% by weight of the carbonate,

4. The emulsifiable concentrate according to claims 1 to 3, comprising at least 25% by weight of the hydrocarbon solvent.

5. The emulsifiable concentrate according to claims 1 to 4, wherein the hydrocarbon solvent, has a solubility in water of not more than 1 % by weight at 20°C.

6. The emulsifiable concentrate according to claims 1 to 5, comprising 5 to 35% by weight of the amide of the formula (I), 1 to 20% by weight of the carbonate and 20 to 85% by weight of the hydrocarbon solvent.

7. The emulsifiable concentrate according to claims 1 to 6, comprising at least 10% by weight of a nonionic surfactant

8. The emulsifiable concentrate according to claims 1 to 7, wherein R¹ is C₇-C₁₁-alkyl and R² is methyl.

9. The emulsifiable concentrate according to claims 1 to 8, wherein the concentrate is present as a homogeneous solution.

10. The emulsifiable concentrate according to claims 1 to 9, wherein the hydrocarbon solvent is an aromatic hydrocarbon.

11. The emulsifiable concentrate according to claims 1 to 10, wherein the pesticide is soluble in water to not more than 1 g/l at 25°C.

12. The emulsifiable concentrate according to claims 1 to 11, wherein the concentrate is largely free from water.

13. An emulsion obtainable by mixing water with the emulsifiable concentrate according to claims 1 to 12.

14. A process for the preparation of the emulsifiable concentrate according to claims 1 to 12 by mixing the water-insoluble pesticide, the carbonate, the amide of the formula (I) and the hydrocarbon solvent.

15. A method for controlling phytopathogenic fungi and/or undesired vegetation and/or undesired attack by insects or mites and/or for regulating the growth of plants, where the concentrate according to any of claims 1 to 12 or the emulsion according to claim 13 is allowed to act on the respective pests, their environment or on the crop plants to be protected from the respective pests, on the soil and/or on undesired plants and/or on the crop plants and/or their environment.

## Patentansprüche

1. Emulgierbares Konzentrat enthaltend ein wasserunlösliches Pestizid; ein Amid der Formel (I)
R¹-C(O)N(R²)₂ (I)
wobei R¹ C₅-C₁₉-Alkyl und R² C₁-C₄-Alkyl bedeutet; ein Carbonat, das Ethylencarbonat oder Propylencarbonat ist; und ein Kohlenwasserstoff-Lösungsmittel, das eine Löslichkeit in Wasser von höchstens 5 Gew.-% bei 20 °C hat,
wobei das emulgierbare Konzentrat höchstens 35 Gew.-% des Amids der Formel (I), höchstens 40 Gew.-% des Carbonats und mindestens 15 Gew.-% des Kohlenwasserstoff-Lösungsmittels enthält.

2. Emulgierbares Konzentrat nach Anspruch 1, enthaltend höchstens 25 Gew.-% des Amids der Formel (I).

3. Emulgierbares Konzentrat nach Anspruch 1 oder 2, enthaltend höchstens 20 Gew.-% des Carbonats.

4. Emulgierbares Konzentrat nach den Ansprüchen 1 bis 3, enthaltend mindestens 25 Gew.-% des Kohlenwasserstoff-Lösungsmittels.

5. Emulgierbares Konzentrat nach den Ansprüchen 1 bis 4, wobei das Kohlenwasserstoff-Lösungsmittel eine Löslichkeit in Wasser von höchstens 1 Gew.-% bei 20°C hat.

6. Emulgierbares Konzentrat nach den Ansprüchen 1 bis 5, enthaltend 5 bis 35 Gew.-% des Amids der Formel (I), 1 bis 20 Gew.-% des Carbonats und 20 bis 85 Gew.-% des Kohlenwasserstoff-Lösungsmittels.

7. Emulgierbares Konzentrat nach den Ansprüchen 1 bis 6, enthaltend mindestens 10 Gew.-% eines nichtionischen Tensids.

8. Emulgierbares Konzentrat nach den Ansprüchen 1 bis 7, wobei R¹ C₇-C₁₁-Alkyl und R² Methyl bedeutet.

9. Emulgierbares Konzentrat nach den Ansprüchen 1 bis 8, wobei das Konzentrat als homogene Lösung vorliegt.

10. Emulgierbares Konzentrat nach den Ansprüchen 1 bis 9, wobei das Kohlenwasserstoff-Lösungsmittel ein aromatischer Kohlenwasserstoff ist.

11. Emulgierbares Konzentrat nach den Ansprüchen 1 bis 10, wobei das Pestizid zu höchstens 1 g/l bei 25°C in Wasser löslich ist.

12. Emulgierbares Konzentrat nach den Ansprüchen 1 bis 11, wobei das Konzentrat weitgehend wasserfrei ist.

13. Emulsion erhältlich durch Mischen von Wasser mit dem emulgierbaren Konzentrat nach den Ansprüchen 1 bis 12.

14. Verfahren zur Herstellung des emulgierbaren Konzentrats nach den Ansprüchen 1 bis 12 durch Mischen von dem wasserunlöslichen Pestizid, dem Carbonat, dem Amid der Formel (I) und dem Kohlenwasserstoff-Lösungsmittel.

15. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man das Konzentrat nach einem der Ansprüche 1 bis 12 oder die Emulsion nach Anspruch 13 auf die jeweiligen Schädlinge, deren Lebensraum oder die vor dem jeweiligen Schädling zu schützenden Kulturpflanzen, den Boden und/oder auf unerwünschte Pflanzen und/oder auf die Kulturpflanzen und/oder deren Lebensraum einwirken lässt.

## Revendications

1. Concentré émulsifiable comprenant un pesticide insoluble dans l'eau ; un amide de formule (I)
R¹-C(O)N(R²)₂ (I)
dans laquelle R¹ est C₅-C₁₅-alkyle et R² est C₁-C₄-alkyle ; un carbonate, qui est le carbonate d'éthylène ou le carbonate de propylène ; et un solvant hydrocarboné en C₆-C₂₀, qui possède une solubilité dans l'eau d'au plus 5% en poids à 20°C ;
**caractérisé en ce que** le concentré émulsifiable comprend au plus 35% en poids de l'amide de formule (I), au plus 40% en poids du carbonate, et au moins 15% en poids du solvant hydrocarboné.

2. Concentré émulsifiable selon la revendication 1, comprenant au plus 25% en poids de l'amide de formule (I).

3. Concentré émulsifiable selon la revendication 1 ou 2, comprenant au plus 20% en poids du carbonate.

4. Concentré émulsifiable selon les revendications 1 à 3, comprenant au moins 25% en poids du solvant hydrocarboné.

5. Concentré émulsifiable selon les revendications 1 à 4, **caractérisé en ce que** le solvant hydrocarboné possède une solubilité dans l'eau d'au plus 1% en poids à 20°C.

6. Concentré émulsifiable selon les revendications 1 à 5, comprenant de 5 à 35% en poids de l'amide de formule (I), de 1 à 20% en poids du carbonate, et de 20 à 85% en poids du solvant hydrocarboné.

7. Concentré émulsifiable selon les revendications 1 à 6, comprenant au moins 10% en poids d'un agent tensioactif non ionique.

8. Concentré émulsifiable selon les revendications 1 à 7, **caractérisé en ce que** R¹ est C₇-C₁₁-alkyle et R² est méthyle.

9. Concentré émulsifiable selon les revendications 1 à 8, **caractérisé en ce que** le concentré est présent sous forme de solution homogène.

10. Concentré émulsifiable selon les revendications 1 à 9, **caractérisé en ce que** le solvant hydrocarboné est un hydrocarbure aromatique.

11. Concentré émulsifiable selon les revendications 1 à 10, **caractérisé en ce que** le pesticide est soluble dans l'eau jusqu'au plus 1 g/l à 25°C.

12. Concentré émulsifiable selon les revendications 1 à 11, **caractérisé en ce que** le concentré est en grande partie dépourvu d'eau.

13. Emulsion pouvant être obtenue par le mélange d'eau avec le concentré émulsifiable selon les revendications 1 à 12.

14. Procédé de préparation du concentré émulsifiable selon les revendications 1 à 12, par le mélange du pesticide insoluble dans l'eau, du carbonate, de l'amide de formule (I) et du solvant hydrocarboné.

15. Méthode de contrôle de champignons phytopathogènes et/ou de végétation non désirée et/ou d'une attaque non désirée par des insectes ou des acariens et/ou de régulation de la croissance de plantes, **caractérisée en ce qu'**on permet au concentré selon l'une quelconque des revendications 1 à 12 ou à l'émulsion selon la revendication 13 d'agir sur les nuisibles respectifs, leur environnement ou sur les plantes de culture à protéger contre les nuisibles respectifs, sur le sol et/ou sur les plantes non désirées et/ou sur les plantes de culture et/ou leur environnement.
